# EUROPEAN PATENT SPECIFICATION

(11) **EP 3 563 388 B1**
(45) Date of publication and mention of the grant of the patent: **14.10.2026**
(21) Application number: 17892065.8
(22) Date of filing: 29.12.2017
(51) Int. Cl.: G21C 7/14, G21C 9/02, G21C 1/32, G21C 7/117

(54) **CONTROL ROD DRIVE MECHANISM (CRDM) WITH REMOTE DISCONNECT MECHANISM**
STEUERSTABANTRIEBSMECHANISMUS (CRDM) MIT FERNTRENNMECHANISMUS
MÉCANISME D'ENTRAÎNEMENT DES BARRES DE COMMANDE (CRDM) DOTÉ D'UN MÉCANISME DE LIBÉRATION À DISTANCE

(30) Priority: 30.12.2016 US 201662441015 P
(43) Date of publication of application: 06.11.2019
(73) Proprietor: NuScale Power, LLC, Corvallis, OR 97330 (US)
(72) Inventor: LOBSCHEID, Christian, Corvallis, OR 97330 (US)
(74) Representative: Mathys & Squire
(86) International application number: PCT/US2017/069034
(87) International publication number: WO 2018/174983

(56) References cited:
- US-A- 4 472 348
- US-A- 4 484 093
- US-A1- 2013 223 579

## Description

This application claims priority to U.S. Provisional Patent Application No. 62/441,015, filed on December 30, 2016 and entitled: CONTROL ROD DRIVE MECHANISM (CDRM) WITH REMOTE DISCONNECT MECHANISM.

### TECHNICAL FIELD

This disclosure generally relates to a control rod drive mechanism of a nuclear reactor with a feature to remotely disconnect the drive shaft from the control rod assembly.

### BACKGROUND

Nuclear reactors may have control rod drive mechanisms (CRDM) located on top of a reactor pressure vessel (RPV) within an upper containment vessel (CNV). The CRDM components inside the reactor pressure vessel may need to maneuver or release drive shafts by gravity during a rapid control rod insertion (SCRAM). The CRDM may be driven remotely by electromagnetic force across the pressure vessel boundary. The CRDM also may need to release the drive shafts from attached control rod assemblies (CRA). This allows upper and lower sections of the RPV to be separated for refueling. The CRA are released and left in the reactor core to avoid a possible reactivity excursion.

US4484093A discloses a linear motion device, more specifically a control rod drive mechanism (CRDM) for inserting and withdrawing control rods into a reactor core, is capable of independently and sequentially positioning two sets of control rods with a single motor stator and rotor. The CRDM disclosed can control more than one control rod lead screw without incurring a substantial increase in the size of the mechanism.

US4472348A discloses a device for providing translatory movement of the control rods inside the closed vessel of a nuclear reactor. The rotor of the drive motor for a screw/nut assembly has fixed to it two pivoting arms formed in the poles of the rotor, and these serve as latching members which keep the screw in its raised position. A tubular casing locks these arms in the opened position while the screw is being raised after the control rod has been allowed to fall into the core of the reactor.

US 2013/223579 A1 discloses a control rod drive mechanism assembly for a nuclear reactor having a nuclear reactor vessel, a nuclear reactor core, a reactor vessel head, a latch housing nozzle, a latch housing, a rod travel housing, a latch assembly, a drive rod assembly and a rod control cluster assembly. The latch housing is integrated with the latch housing nozzle, the rod travel housing is welded to the latch housing, and the latch assembly is connected to the rod travel housing. The latch assembly includes the drive rod assembly and the rod control cluster assembly which is attached to the drive rod assembly.

### SUMMARY OF THE INVENTION

The invention relates to a control rod drive mechanism and a method of controlling a drive shaft connected to a control rod assembly in a nuclear pressure vessel, as set out in appended claims 1 to 15.

### BRIEF DESCRIPTION OF THE DRAWINGS

The included drawings are for illustrative purposes and serve to provide examples of possible structures and operations for the disclosed inventive systems, apparatus, methods and computer-readable storage media. These drawings in no way limit any changes in form and detail that may be made by one skilled in the art without departing from the scope of the disclosed implementations.
FIG. 1 shows a schematic diagram of an example nuclear reactor module.
FIG. 2 is a perspective side sectional view of the upper head of a reactor pressure vessel with control rod drive mechanisms (CRDMs) inside a containment vessel.
FIG. 3 is a perspective view of a control rod assembly partially inserted into a nuclear fuel assembly.
FIGS. 4A and 4B are schematic diagrams showing disassembly of a reactor pressure vessel.
FIG. 5 is side view of a single-hinge type control rod drive mechanism.
FIG. 6 is a plan view of the single-hinge type control rod drive mechanism.
FIG. 7 is a side sectional view of the control rod drive mechanism in FIG. 5.
FIG. 8 is a further enlarged detail side sectional view of a single-hinge latch assembly within the control rod drive mechanism.
FIG. 9 is a cross-sectional plan view of a drive assembly.
FIG. 10 is a cross-sectional plan view of the single-hinge latch assembly in FIG. 8.
FIGS. 11A-11E show side sectional views of the single-hinge type control rod drive mechanism in FIG. 5 in different operating states.
FIG. 12 is side view of a dual-hinge type control rod drive mechanism.
FIGS. 13A and 13B show side sectional views of the dual-hinge type control rod drive mechanism of FIG. 12 in different operating states.
FIG. 14 is an enlarged side sectional view of a dual-hinge latch assembly within the control rod drive mechanism of FIG. 12.
FIG. 15 is a cross-sectional plan view of the dual-hinge latch assembly of FIG. 14.
FIGS. 16A-16G are schematic diagrams showing different control rod drive mechanism (FIG. 5 or FIG. 12) operating states, wherein

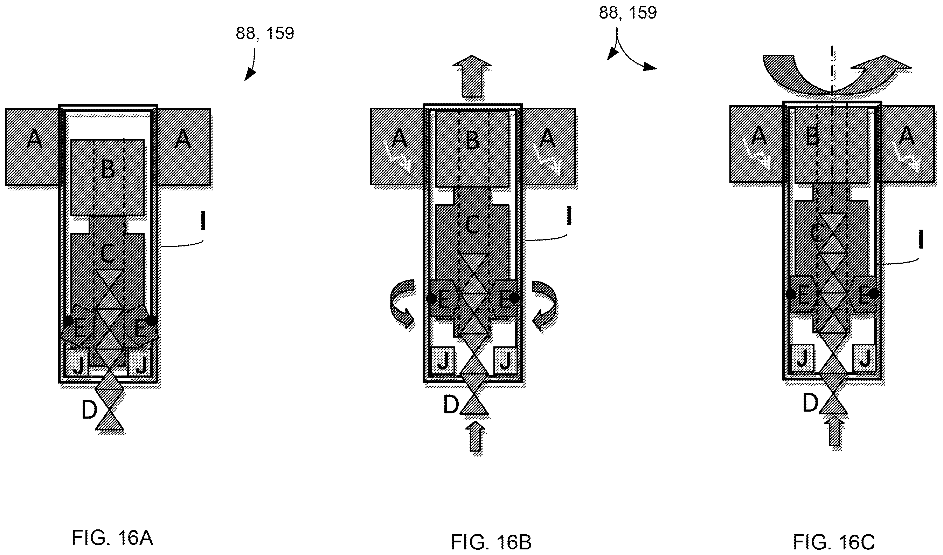

FIGS. 16A-16B illustrate an example process for using a drive mechanism to engage and linearly move a drive shaft.
FIGS. 16C-16G illustrate an example process for using a remote disconnect system to decouple a drive shaft from a control rod assembly.

### DETAILED DESCRIPTION

A control rod drive mechanism includes a drive assembly located on top of a reactor pressure vessel. The drive assembly includes annular drive magnets extending around a top end of a drive shaft and annular drive coils on the outside of a pressure boundary. A latch assembly on the inside of the pressure boundary is coupled to annular drive magnets and engages with the drive shaft in response to actuation of the drive assembly. The drive coils also rotate the drive magnets and the engaged latch assembly to axially displace the drive shaft. Deactivating the drive coils disengages the latch assembly from the drive shaft, dropping a connected control rod assembly via gravity into a nuclear fuel assembly.

The control rod drive mechanism also may include a disconnect assembly with a disconnect magnet, coupled to a top end of a disconnect rod that extends through the drive shaft. Annular disconnect coils on the outside of the pressure boundary extend around the disconnect magnet to hold the disconnect magnet and the disconnect rod in a raised position, in order to remotely disconnect the drive shaft from, or reconnect to, the control rod assembly.

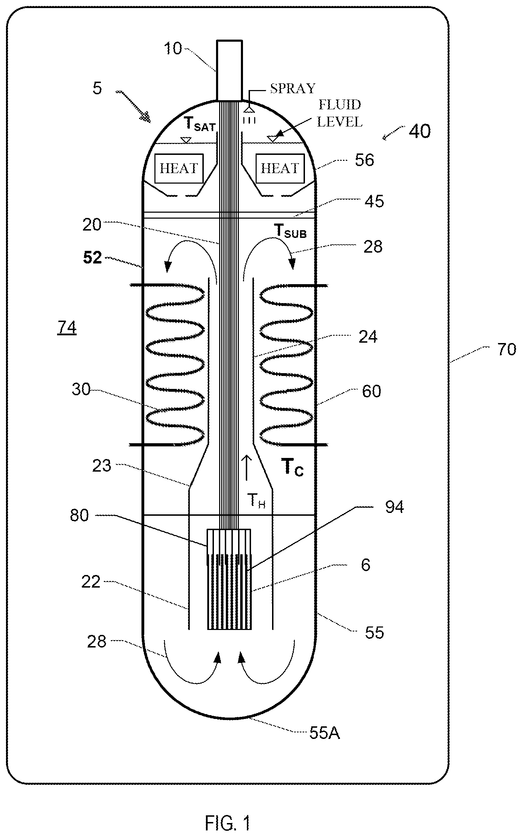

FIG. 1 illustrates a cross-sectional view of an example integral reactor module 5 comprising reactor pressure vessel 52. Reactor core 6 is shown located near a lower head 55 of the reactor pressure vessel 52. The reactor core 6 may be located in a shroud 22 which surrounds reactor core 6 about its sides. A riser section 24 is located above the reactor core 6 surrounded by steam generators 30.

When primary coolant 28 is heated by reactor core 6 as a result of fission events, primary coolant 28 may be directed from shroud 22 up into an annulus 23 located above reactor core 6, and out of riser 24. This may result in additional primary coolant 28 being drawn into shroud 22 to be heated in turn by reactor core 6, which draws yet more primary coolant 28 into shroud 22. The primary coolant 28 that emerges from riser 24 may be cooled down by steam generators 30 and directed towards the outside of the reactor pressure vessel 52 and then returned to the bottom of the reactor pressure vessel 52 through natural circulation.

Primary coolant 28 circulates past the reactor core 6 to become high-temperature coolant TH and then continues up through the riser section 24 where it is directed back down the annulus and cooled off by steam generators 30 to become low-temperature coolant TC. One or more control rod drive mechanisms (CRDM) 10 are operably coupled to a number of drive shafts 20 that may be configured to interface with a plurality of control rod assemblies 80 located above reactor core 6.

A reactor pressure vessel baffle plate 45 may be configured to direct the primary coolant 28 towards a lower end 55 of the reactor pressure vessel 52. A surface of the reactor pressure vessel baffle plate 45 may come into direct contact with and deflect the primary coolant 28 that exits the riser section 24. In some examples, the reactor pressure vessel baffle plate 45 may be made of stainless steel or other materials.

The lower end 55 of the reactor pressure vessel 52 may comprise a ellipsoidal, domed, concave, or hemispherical portion 55A, wherein the ellipsoidal portion 55A directs the primary coolant 28 towards the reactor core 6. The ellipsoidal portion 55A may increase flow rate and promote natural circulation of the primary coolant through the reactor core 6. Further optimization of the coolant flow 28 may be obtained by modifying a radius of curvature of the reactor pressure vessel baffle plate 45 to eliminate/minimize boundary layer separation and stagnation regions.

The reactor pressure vessel baffle plate 45 is illustrated as being located between the top of the riser section 24 and a pressurizer region 40. The pressurizer region 40 is shown as comprising one or more heaters and a spray nozzle configured to control a pressure, or maintain a steam dome, within an upper end 56 or head of the reactor pressure vessel 52. Primary coolant 28 located below the reactor pressure vessel baffle plate 45 may comprise relatively sub-cooled coolant TSUB, whereas primary coolant 28 in the pressurizer region 40 in the upper end 56 of the reactor pressure vessel 52 may comprise substantially saturated coolant TSAT.

A fluid level of primary coolant 28 is shown as being above the reactor pressure vessel baffle plate 45, and within the pressurizer region 40, such that the entire volume between the reactor pressure vessel baffle plate 45 and the lower end 55 of the reactor pressure vessel 52 may be full of primary coolant 28 during normal operation of reactor module 5.

Shroud 22 may support one or more control rod guide tubes 94 that serve to guide control rod assemblies 80 that are inserted into, or removed from, reactor core 6. In some examples, drive shafts 20 may pass through reactor pressure vessel baffle plate 45 and through riser section 24 in order to control the position of control rod assemblies 80 relative to reactor core 6.

Reactor pressure vessel 52 may comprise a flange by which lower head 55 may be removably attached to an upper reactor vessel body 60 of reactor pressure vessel 52. In some examples, when lower head 55 is separated from upper reactor vessel body 60, such as during a refueling operation, riser section 24, baffle plate 45, and other internals may be retained within upper reactor vessel body 60, whereas reactor core 6 may be retained within lower head 55.

Additionally, upper reactor vessel body 60 may be housed within a containment vessel 70. Any air or other gases that reside in a containment region 74 located between containment vessel 70 and reactor pressure vessel 52 may be removed or voided prior to or during reactor startup. The gases that are voided or evacuated from the containment region 74 may comprise non-condensable gases and/or condensable gases. During an emergency operation, vapor and/or steam may be vented from reactor pressure vessel 52 into containment region 74, or only a negligible amount of non-condensable gas (such as hydrogen) may be vented or released into containment region 74.

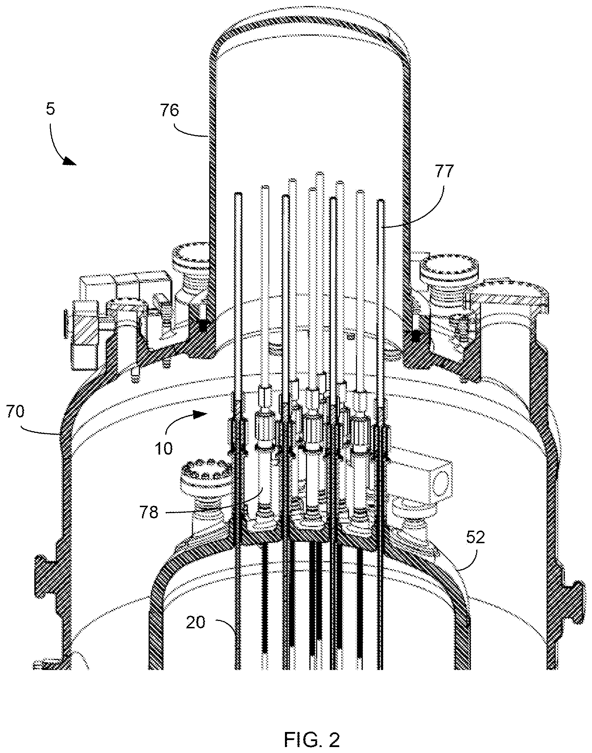

FIG. 2 illustrates an upper cross-sectional view of reactor module 5 and example control rod drive mechanism (CRDM) assemblies 10. Reactor module 5 may comprise an upper containment vessel 76 housing at least a portion of the CRDM 10. A plurality of drive shaft housings 77 may be located within upper containment vessel 76. A plurality of drive shafts 20 associated with CRDMs 10 may be located in a reactor pressure vessel 52 that is housed in main containment vessel 70. Drive shaft housings 77 may be configured to house at least a portion of drive shafts 20 during operation of reactor module 5. In some examples, essentially all of the CRDMs 10 may be housed within main containment vessel 70.

Upper containment vessel 76 may be removably attached to main containment vessel 70. By removing upper containment vessel 76, the overall size and/or volume of reactor module 5 may be reduced, which may affect peak containment pressure and/or water levels. In addition to reducing the overall height of reactor module 5, the removal of upper containment vessel 76 from main containment vessel 70 may further reduce the weight and shipping height of reactor module 5. In some example reactor modules, several tons of weight may be removed for each foot that the overall height of reactor module 5 is decreased.

Reactor pressure vessel 52 and/or main containment vessel 70 may comprise one or more steel vessels. Additionally, main containment vessel 70 may comprise one or more flanges by which a top head or a bottom head of main containment vessel 70 may be removed from the containment vessel body, such as during a refueling operation.

During refueling, reactor module 5 may be relocated from an operating bay into a refueling bay, and a series of disassembly steps may be performed on the reactor module 5. The operating bay may be connected to the refueling bay by water, such that reactor module 5 is transported under water. Main containment vessel 70 may be disassembled, e.g., the top or bottom head may be separated from the containment vessel body, in order to gain access to CRDM 10 and/or to reactor pressure vessel 52. At this stage of refueling, reactor pressure vessel 52 may remain completely submerged in the surrounding water in the refueling bay. In some examples, an upper portion of CRDM 10, such as the plurality of drive shaft housings 77, may be located above water to facilitate access to CRDM 10 in a dry environment. In other examples, the entire CRDM 10 may be submerged in the pool of water in the refueling bay.

CRDMs 10 may be mounted to an upper head of reactor pressure vessel 52 by nozzles 78. Nozzles 78 may be configured to support CRDMs 10 when main containment vessel 70 is partially or completely disassembled during the refueling operation. Additionally, CRDMs 10 may be configured to support and/or control the position of drive shafts 20 within reactor pressure vessel 52.

Reactor pressure vessel 52 may comprise a substantially capsule-shaped vessel. In some examples, reactor pressure vessel 52 may be approximately 20 meters in height. Drive shafts 20 may extend from CRDMs 10, located at the upper head of reactor pressure vessel 52, into a lower head of reactor pressure vessel 52, so that they can be connected to control rod assemblies 80 that are inserted into reactor core 6 (FIG. 1). The distance from the upper head of reactor pressure vessel 52 to reactor core 6, while less than the overall height of reactor pressure vessel 52, may therefore result in the length of drive shafts 20 also being approximately 20 meters in length or, in some examples, somewhat less than the height of reactor pressure vessel 52.

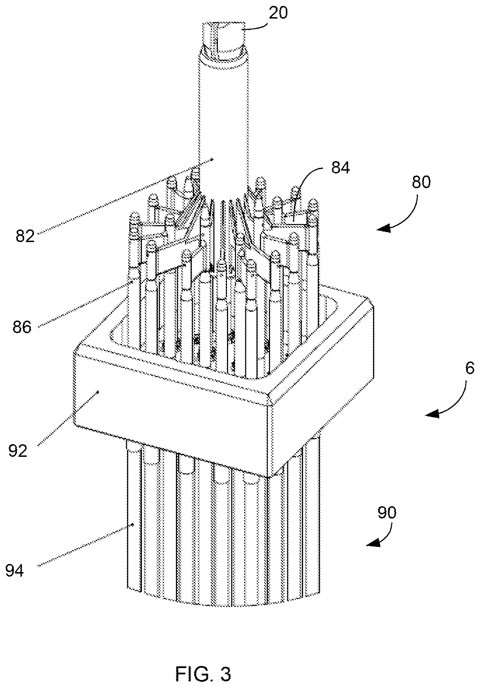

FIG. 3 is a perspective view of a control rod assembly 80 held partially above and partially inserted into a nuclear fuel assembly 90 in reactor core 6. As explained above, multiple drive shafts 20 extend down from rod drive mechanisms 10 to the top of reactor core 6. Control rod assembly 80 may include a cylindrical hub 82 that attaches to the bottom end of drive shaft 20. Arms 84 extend radially out from cylindrical hub 82 and attach at distal ends to top ends of control rods 86.

Control rods 86 extend into a nuclear fuel assembly 90 that is alternatively referred to as a fuel bundle that forms part of reactor core 6. Nuclear fuel assembly 90 may include a top nozzle 92 that supports multiple guide tubes 94. Guide tubes 94 extend down from nozzle 92 and in-between nuclear fuel rods (not shown). Control rods 86 control the fission rate of the uranium and plutonium in the nuclear fuel rods.

Control rods 86 are typically held by drive shaft 20 above nuclear fuel assembly 90 or held slightly inserted into nuclear fuel assembly 90. Reactor core 6 may overheat. A nuclear SCRAM operation is initiated where control CRDMs 10 in FIG. 1 release drive shafts 20 dropping control rods 86 down into guide tubes 94 and in-between the nuclear fuel rods.

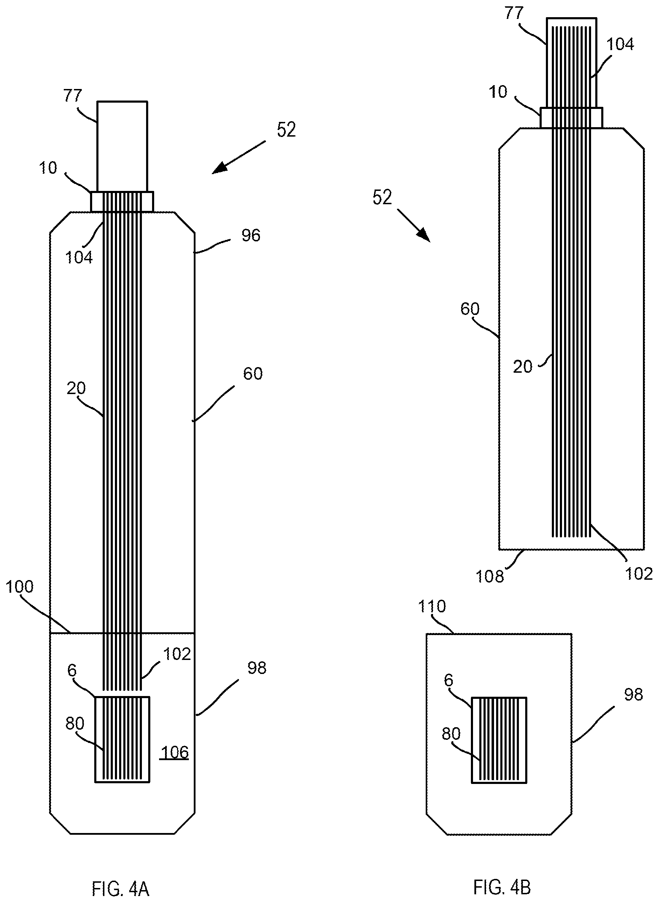

FIG. 4A shows a cross-sectional view of an example reactor pressure vessel 52. CRDMs 10 may be mounted to an upper head 96 of reactor pressure vessel 52 and configured to support a plurality of drive shafts 20 that extend through the length of an upper reactor vessel body 60 of reactor pressure vessel 52 towards reactor core 6 located in a lower head 98 of reactor pressure vessel 52. In some examples, lower head 98 may be removably attached to upper reactor vessel body 60 at a flange 100, such as by a plurality of bolts.

In addition to housing a number of nuclear fuel rods, reactor core 6 may be configured to receive a plurality of control rod assemblies 80 that may be movably inserted between the fuel rods to control the power output of reactor core 6. When reactor core 6 is generating power, lower ends 102 of drive shafts 20 may be connected to control rod assemblies 80. Additionally, CRDMs 10 may be configured to control the location of control rod assemblies 80 within reactor core 6 by moving drive shafts 20 either up or down within reactor pressure vessel 52.

Upper ends 104 of drive shafts 20 may be housed in CRDM pressure housing 77 located above upper head 96 of reactor pressure vessel 52, such as when control rod assemblies 80 are removed from reactor core 6. In some examples, CRDM pressure housing 77 may comprise a single pressure vessel configured to house upper ends 104 of drive shafts 20. In other examples, CRDM pressure housing 77 may comprise individual housings for each of the drive shafts 20.

Lower ends 102 of drive shafts 20 are shown disconnected from control rod assemblies 80, such as may be associated with a refueling operation of reactor core 6. During an initial stage of the refueling operation, lower head 98 may remain attached to upper reactor vessel body 60 while drive shafts 20 are disconnected from control rod assemblies 80. Reactor pressure vessel 52 may remain completely sealed to the surrounding environment, which in some examples may comprise a pool of water that at least partially surrounds reactor pressure vessel 52, during the initial stage of the refueling operation.

CRDMs 10 may comprise remote disconnect mechanisms by which drive shafts 20 may be disconnected from control rod assemblies 80 without opening or otherwise disassembling reactor pressure vessel 52. In some examples, reactor pressure vessel 52 may form a sealed region 106 that surrounds reactor core 6, control rod assemblies 80, and lower ends 102 of drive shafts 20. By remotely disconnecting drive shafts 20, control rod assemblies 80 may remain within reactor core 6 when drive shafts 20 are withdrawn, at least partially, into CRDM pressure housing 77.

FIG. 4B illustrates the example reactor pressure vessel 52 of FIG. 4A partially disassembled. During the refueling operation, lower head 98 may be separated from upper reactor vessel body 60 of reactor pressure vessel 52. In some examples, lower head 98 may be held stationary in a refueling station while upper reactor vessel body 60 is lifted up by a crane and moved away from lower head 98 to facilitate access to reactor core 6.

Drive shafts 20 are shown in a retracted or withdrawn position, such that lower ends 102 may be completely retained within upper reactor vessel body 60 and/or CRDM pressure housing 77. For example, CRDMs 10 may be configured to raise lower ends 102 of drive shafts 20 above a lower flange 108 used to mount upper reactor vessel 60 together with an upper flange 110 of lower head 98. Withdrawing lower ends 102 of drive shafts 20 into upper reactor vessel body 60 may provide additional clearance between lower flange 108 and upper flange 110 during the refueling operation and further may keep drive shafts 20 from contacting external objects or getting damaged during transport and/or storage of upper reactor vessel body 60. Additionally, upper ends 104 of drive shafts 20 may similarly be housed and/or protected by CRDM pressure housing 77 when drive shafts 20 are in the retracted or withdrawn position.

As discussed above, control rod assemblies 80 may remain completely inserted in reactor core 6 during some or all of the refueling operation. In some examples, maintaining the insertion of control rod assemblies 80 within reactor core 6 may be dictated by nuclear regulatory and/or safety considerations.

### Single-Hinge Type Control Rod Drive Mechanism

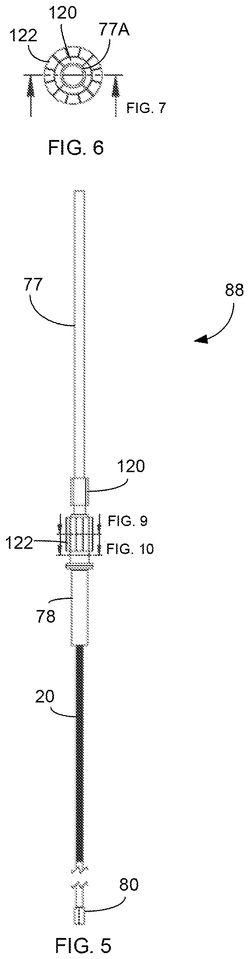

FIG. 5 is a side view and FIG. 6 is a plan view of a single-hinge type control rod drive mechanism 88 that includes a remote disconnect mechanism. Referring to FIGS. 5 and 6, a drive shaft housing 77 extends over the top end of drive shaft 20 and around the latch mechanism 138. Drive shaft housing 77 is alternatively referred to as an upper pressure boundary.

As described above, drive shaft 20 enters reactor pressure vessel (RPV) 52 in FIG. 2 through a nozzle 78 connected on top to the bottom end of drive shaft housing 77. A bottom end of drive shaft 20 detachably connects to control rod assembly 80 as shown in more detail below.

Control rod drive mechanism 88 includes a drive assembly 122 that raises and lowers drive shaft 20 and attached control rod assembly 80. Control rod drive mechanism 88 also includes a disconnect assembly 120 that disconnects drive shaft 20 from control rod assembly 80. Both drive assembly 122 and disconnect assembly 120 may be remotely activated and controlled from outside of the RPV 52 via electrical control signals.

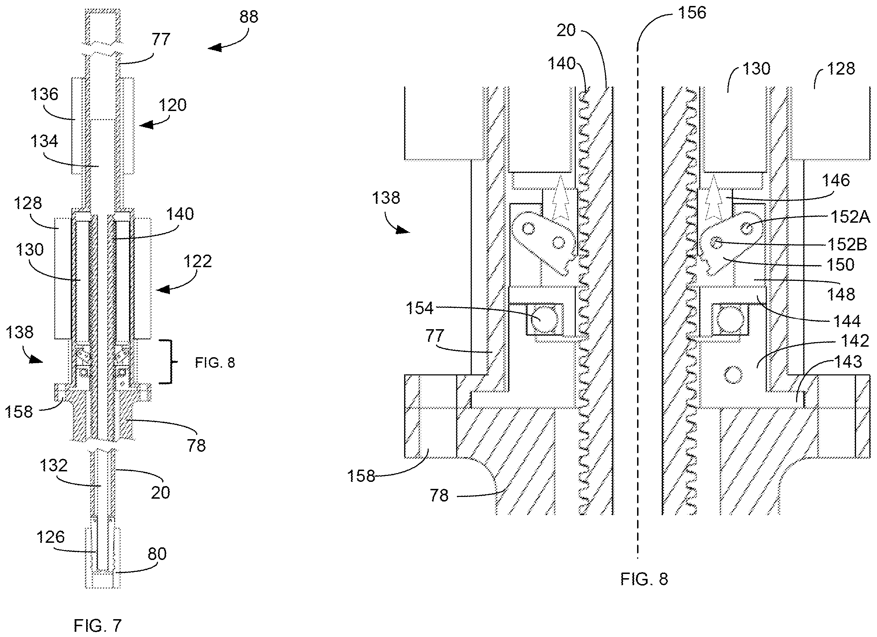

FIG. 7 is a side sectional view of control rod drive mechanism 88 and FIG. 8 is a more detailed sectional view of a single-hinge latch assembly 138 used in control rod drive mechanism 88. Referring to FIGS. 7 and 8, through-holes 158 are provided in drive shaft housing 77 and nozzle 78. Bolts (not shown) may be inserted into holes 158 to connect drive shaft housing 77 to nozzle 78 that extends up from the upper head of RPV 52 as shown above in FIG. 2.

A disconnect rod 132 extends through the entire length of drive shaft 20 and a cylindrical disconnect magnet 134 is attached to a top end of disconnect rod 132. Disconnect magnet 134 extends up into drive shaft housing 77 and annular disconnect coils 136 extend around drive shaft housing 77 and disconnect magnet 134. When activated, disconnect coils 136 may hold disconnect magnet 134 in a raised position allowing disconnect rod 132 to retract vertically upwards within drive shaft 20.

An upper end of drive shaft 20 includes a threaded outside surface 140. In one example, threads 140 may comprise ACME^{®} type threads for linearly displacing drive shaft 20. Of course, any other type of threading or gearing also may be used. Drive shaft 20 extends from underneath disconnect magnet 134, through drive shaft housing 77 and nozzle 78, and into the upper head of RPV 52 (FIG. 1). Drive shaft 20 further extends through the length of RPV 52 and a bottom end includes a grapple 126 that connects to control rod assembly 80. Disconnect magnet 134 and disconnect coils 136 encompass the disconnect assembly 120.

An annular arrangement of drive coils 128 may extend around the outside of drive shaft housing 77 and an annular arrangement of drive magnets 130 inside of drive shaft housing 77 may extend around drive shaft 20. Continuously activating drive coils 128 may raise drive magnets 130. Alternating activation of alternating drive coils 128 in FIG. 8 also may rotate drive magnets 130 around a center axis 156 of drive shaft 20. Drive coils 128, drive magnets 130 and latch assembly 138 form the drive assembly 122.

A single-hinge latch assembly 138 is coupled on the bottom end to the drive shaft housing 77 and coupled on top to drive magnets 130. Latch assembly 138 includes an annular base 142 that includes a central opening that extends around drive shaft 20. A lip 143 extends out from an outside bottom end of base 142 and seats into a recess formed between the bottom end of drive shaft housing 77 and the top end of nozzle 78. Lip 143 functions as a hold-down holding base 142 down against the top surface of nozzle 78.

An annular collar 148 is rotationally attached to base 142 and includes a step 144 that attaches on top of bearings 154 that extend around the top of base 142. Collar 146 also includes a center opening that receives and extends around drive shaft 20. Collar 146 is held vertically/elevationally down onto base 142 but rotates about central axis 156 of drive shaft 20 on top of bearings 154 and base 142.

The outside end of a gripper 150 is pivotally attached to an upper end of collar 148 with a first pin 152A. The inside end of gripper 150 is pivotally attached to a bottom end of a latch 146 by a second pin 152B. A top end of latch 146 is attached to drive magnets 130. When drive magnets 130 are lowered a bottom end of latch 146 may sit on top of step 144 of collar 148.

When activated, drive coils 128 lift drive magnets 130 vertically upwards also lifting latch 146. Lifting latch 146 causes the inside ends of grippers 150 to rotate upwards engaging with threads 140 on drive shaft 20. The outside ends of grippers 150 rotate about pins 152A which are held vertically in place by collar 148.

After raising the inside ends of grippers 150, drive coils 128 may start rotating drive magnets 130 about central axis 156 of drive shaft 20. The bottom ends of drive magnets 130 start rotating raised latch 146 and attached gripper 150 around the outside circumference of drive shaft 20. Rotating gripper 150 also rotates collar 148 over the top of base 142 and around central axis 156 while remaining elevationally held down in place by base 142.

The inside end of grippers 150 rotate within threads 140 moving drive shaft 20 axially and linearly upwards inside of drive shaft housing 77 and nozzle 78. Drive coils 128 may rotate drive magnets 130 in an opposite direction, also rotating attached grippers 150 within threads 140 in an opposite direction. Accordingly, grippers 150 axially and linearly move drive shaft 20 in an upward or downward direction as directed by an electrical control system.

Deactivating drive coils 128 drops drive magnets 130 vertically downwards. Inside ends of grippers 150 also rotate downwards about pins 152B, disengaging from threads 140. Now released from grippers 150, drive shaft 20 is free to drop vertically downwards via gravity.

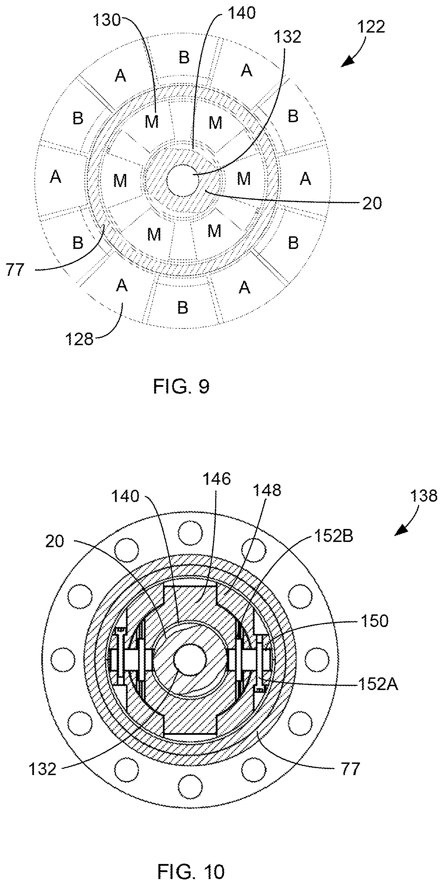

FIG. 9 is a cross-sectional plan view of drive assembly 122. Annular drive coils 128 extend around the outside of drive shaft housing 77 and annular drive magnets 130 extend around the inside of drive shaft housing 77. Drive shaft 20 extends through a central opening formed in drive magnets 130 and disconnect rod 132 extends through a hole formed along the central axis of drive shaft 20. Threads 140 extend around the outside surface of drive shaft 20.

When continuously activated, drive coils 128 generate an electromagnetic field that vertically lifts up drive magnets 130. When drive coils 128 are activated in an alternating pattern, the electromagnetic field also rotates drive magnets 130 around the central axis causing drive assembly 122 to operate effectively like an electrical motor. For example, the electrical control system may activate drive coils A during a first period and activate drive coils B during an alternating second period. The alternating activation of drive coils A and B cause drive magnets M to rotate about a vertical axis that extends through drive shaft 20.

FIG. 10 is a cross-sectional plan view of single-hinge latch assembly 138. Disconnect rod 132 extends through the center of drive shaft 20. Threads 140 extend around the outside surface of drive shaft 20. Latch 146 has an annular cross-sectional shape and attaches to the inside end of gripper 150 via pin 152B. Collar 148 also includes an annular cross-sectional shape and attached to the outside end of gripper 150 via pin 152A. As explained above, latch 146 is attached to drive magnets 130 and can move vertically up and down. Drive shaft housing 77 also has an annular cross-sectional shape concentrically aligned with drive shaft 20. Also note that any number of grippers 150 may be located around drive shaft 20. For example, four grippers 150 may be located 90 degrees apart around drive shaft 20.

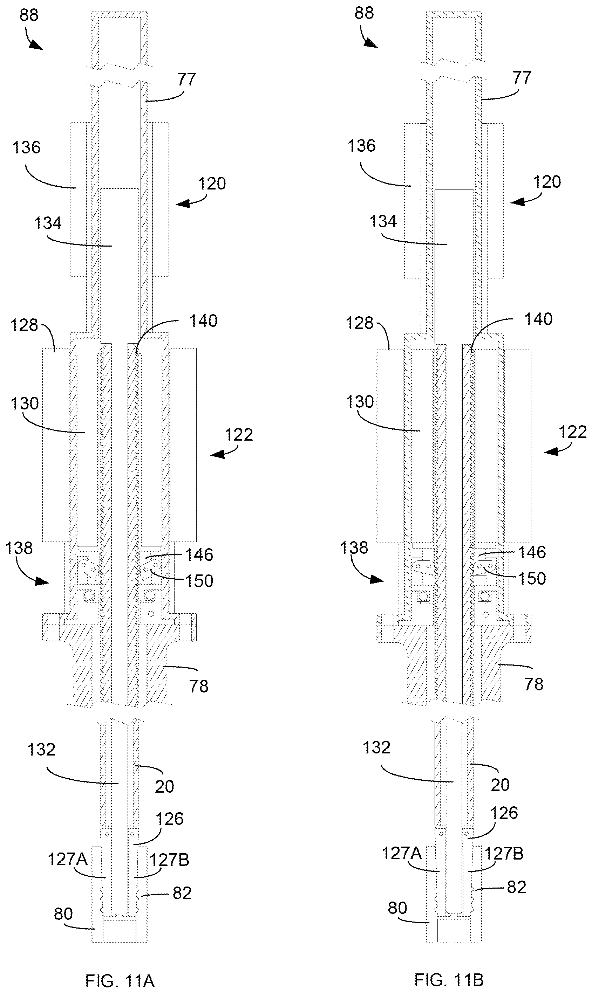

FIGS. 11A-11E are side sectional views showing different operating positions of control rod drive mechanism 88. Referring to FIG. 11A, drive assembly 122 is shown in a lowered state. Drive coils 128 are deactivated and drive magnets 130 are in a lowered position, with the control rod assembly 80 fully inserted into reactor core 6 (FIG. 1). Lowered drive magnets 130 with attached latch 146 released grippers 150 from threads 140 of drive shaft 20.

During a loss of electric power or forced SCRAM, drive coils 128 may deactivate, allowing gravity to drop drive shaft 20 downward, disconnected from latch assembly 138. Attached control rod assembly 80 accordingly drops into fuel assembly 90 neutralizing reactor core 6 (see FIGS. 1 and 3). Thus, CRDM 88 has the advantage of automatically scramming reactor core 6 whenever deactivated during a power failure.

Disconnect assembly 120 is also shown in a lowered state. Disconnect coils 136 are deactivated and disconnect magnet 134 is in a lowered position sitting on top of drive shaft 20. In the lowered position, the bottom end of disconnect rod 132 extends in-between reciprocating arms 127A and 127B of grapple 126. Spread-apart grapple arms 127A and 127B press against and lock into grooves in cylindrical hub 82 of control rod assembly 80.

FIG. 11B shows drive assembly 122 in a raised state. Drive coils 128 are activated and drive magnets 130 are in a raised position. Raised drive magnets 130 raise attached latch 146 moving inside ends of grippers 150 upward, interlocking with threads 140 of drive shaft 20. Locked grippers 150 can raise or lower drive shaft 20 based on the rotational direction of drive magnets 130.

Disconnect assembly 120 is still shown in a lowered state where the bottom end of disconnect rod 132 remains inserted in-between grapple arms 127A and 127B. Spread-apart grapple arms 127A and 127B remain locked inside of cylindrical hub 82 locking the bottom end of drive shaft 20 to control rod assembly 80.

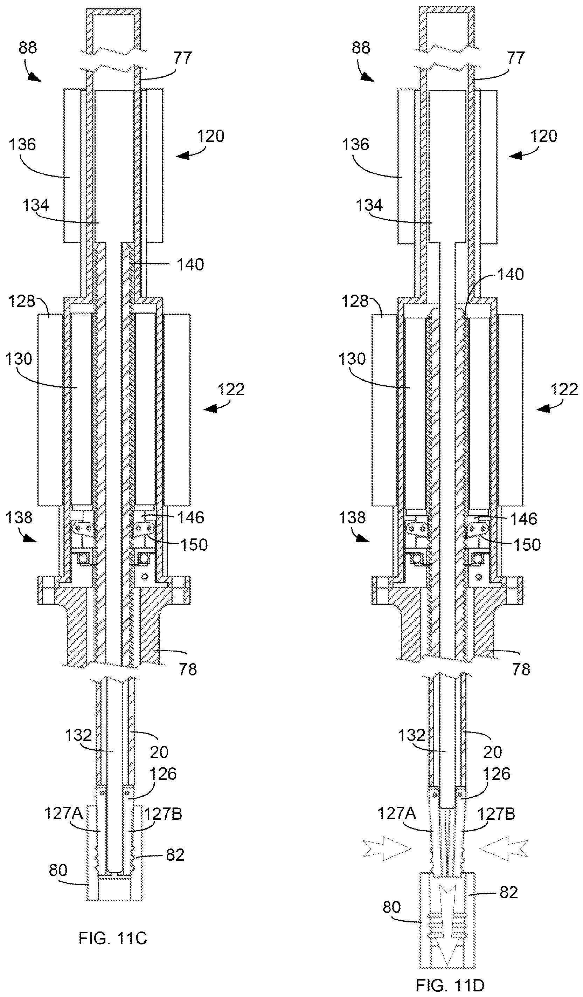

FIG. 11C shows drive assembly 122 in a raised state. Drive coils 128 are activated and drive magnets 130 are raised, moving attached latch 146 upward engaging inside ends of grippers 150 with threads 140. Drive coils 128 also may start rotating drive magnets 130 causing grippers 150 to rotate around engaged threads 140 of drive shaft 20. Rotating grippers 150 force drive shaft 20 axially and linearly upwards into drive shaft housing 77 and lift connected control rod assembly 80 by a short distance that does not cause a reactivity insertion into the reactor core (within a so-called dead band).

Raising drive shaft 20 also raises disconnect magnet 134, maintaining the bottom end of attached disconnect rod 132 in-between grapple arms 127A and 127B. In other words, raising drive shaft 20 and disconnect rod 132 together keeps the bottom end of drive shaft 20 attached to control rod drive mechanism 80, prior to the disconnection discussed below.

FIG. 11D shows drive assembly 122 in a lowered state and disconnect assembly 120 in a raised state. Disconnect coils 136 are activated when drive shaft 20 and disconnect magnet 134 are in the raised position shown in FIG. 11C. Drive coils 128 then may rotate drive magnets 130 in an opposite direction lowering drive shaft 20 vertically downward. At the same time, disconnect coils 136 hold disconnect magnet 134 in a raised position. As grippers 150 continue to move drive shaft 20 linearly downward, the bottom end of disconnect rod 132 slides up and out from in-between grapple 126. Grapple arms 127A and 127B accordingly reciprocate inwards disconnecting from control rod assembly 80, which drops a short distance. Alternatively, drive coils 128 are deactivated dropping drive shaft 20 and disconnecting control rod assembly 80, with disconnect coils 136 holding disconnect magnet 134 in a raised position.

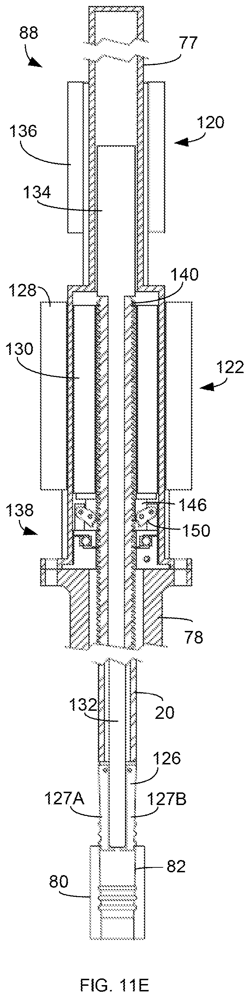

FIG. 11E shows disconnect assembly 120 and drive assembly 122 both in a lowered state. Deactivating disconnect coils 136 releases disconnect magnet 134 causing the bottom end of disconnect rod 132 to slide in-between grapple arms 127A and 127B. Drive coils 128 then may deactivate disconnecting grippers 150 from drive shaft 20. Spread-apart grapple 126 then sits on the top of control rod assembly 80.

Thus, drive coils 128 and disconnect coils 136 can be remotely activated and deactivated to linearly displace drive shaft 20 and also to disconnect drive shaft 20 from control rod assembly 80 during a reactor core refueling operation. Reconnecting the control rod assembly 80 after completion of refueling and re-assembly of reactor vessel 52 (FIGS. 4A and 4B) may be performed in reverse order of the steps shown in FIG. 11A to 11D.

### Dual-Hinge Type Control Rod Drive Mechanism

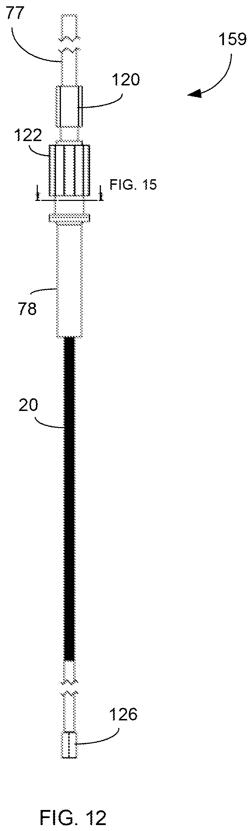

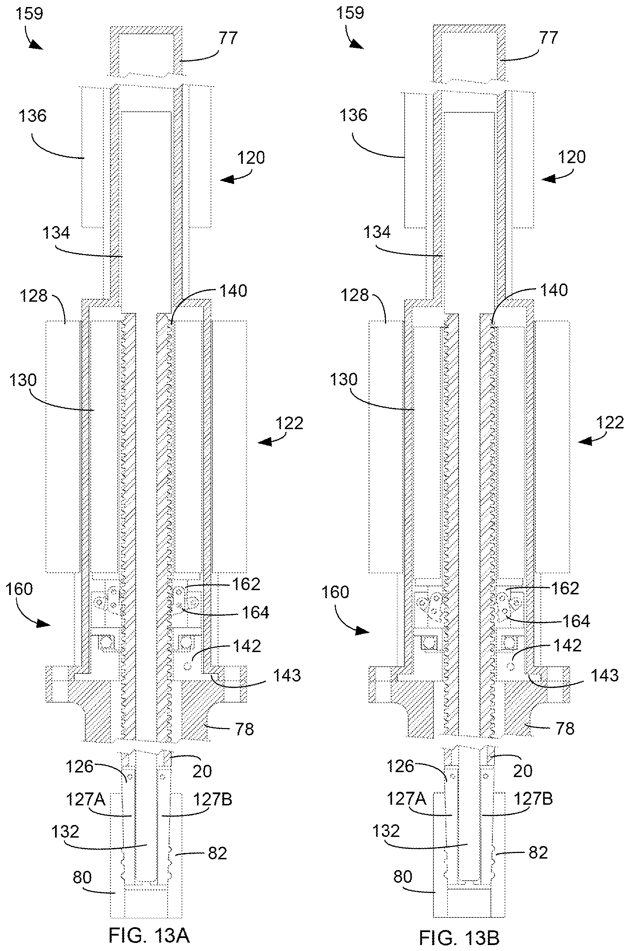

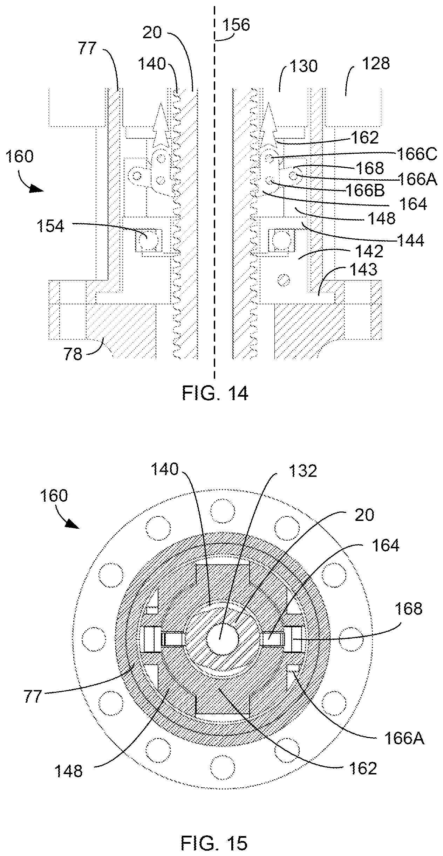

FIG. 12 is a side view of a dual-hinge type control rod drive mechanism 159. FIGS. 13A and 13B are side sectional views of control rod drive mechanism 159. FIG. 14 is a more detailed view of the dual-hinge latch assembly 160.

Referring to FIGS. 12, 13A, 13B, and 14, drive assembly 122 and disconnect assembly 120 in control rod drive mechanism 159 include substantially the same drive and disconnect coils and magnets as described above. Drive shaft housing 77 and nozzle 78 are also all substantially the same as those described above. Disconnect rod 132, drive shaft 20, and threaded outside surface 140 are also similar to those described above.

Similar to above, continuously activating drive coils 128 may raise and align drive magnets 130 with annular drive coils 128. Alternating activation of adjacent drive coils 128 also may rotate drive magnets 130 around a central axis 156 of drive shaft 20, to force linear motion of drive shaft 20 and attached control rod assembly 80.

Dual-hinge latch assembly 160 is coupled at a bottom end to drive shaft housing 77 and coupled at a top end to drive magnets 130. Latch assembly 160 includes a similar base 142 at described above that includes a central opening that extends around drive shaft 20. A similar lip 143 extends out from an outside bottom end of base 142 and seats into a recess formed between the bottom end of drive shaft housing 77 and the top end of nozzle 78. Lip 143 functions as a hold-down holding base 142 down against a top surface of nozzle 78.

Referring to FIG. 13A, drive assembly 122 is shown in a raised state. Activating drive coils 128 raises drive magnets 130 and attached latch 162. The lower ends of grippers 164 move upwards and inwards engaging with threads 140 of drive shaft 20. Locked grippers 164 can then raise or lower drive shaft 20 based on the rotational direction of drive magnets 130.

Disconnect assembly 120 is shown in a lowered position where the bottom end of disconnect rod 132 is inserted in-between arms 127A and 127B of grapple 126. Spread-apart arms 127A and 127B lock inside of cylindrical hub 82 locking the bottom end of drive shaft 20 to control rod assembly 80.

Referring to FIG. 13B, drive assembly 122 and disconnect assembly 120 are shown in lowered states. Deactivating drive coils 128 lowers drive magnets 130 and attached latch 162. The grippers 164 move downwards and outwards disengaging with threads 140 of drive shaft 20.

Disconnect assembly 120 is still shown deactivated where the bottom end of disconnect rod 132 remains inserted in-between arms 127A and 127B of grapple 126. Spread-apart arms 127A and 127B remain locked inside of cylindrical hub 82 locking the bottom end of drive shaft 20 to control rod assembly 80.

In FIG. 14 an annular collar 148 similar in design to FIG. 8 is attached, but rotationally de-coupled, to base 142 and includes a similar step 144 that attaches on top of bearings 154 that extend around the top of base 142. Collar 146 also includes a center opening that receives and extends around drive shaft 20. Collar 146 is held vertically/elevationally down onto base 142 but rotates about central axis 156 of drive shaft 20 on top of bearings 154 and base 142.

The outside end of a hinge 168 is pivotally attached to a top end of collar 148 with a first pin 166A. The inside end of hinge 168 is pivotally attached to a lower end of a gripper 164 by a second pin 166B. The top end of a latch 162 is attached to drive magnet 130 and a bottom end of latch 162 is pivotally attached to a top end of gripper 164 by a third pin 166C.

When activated, drive coils 128 lift drive magnets 130 vertically upwards also raising latch 162. Gripper 164 and the inside end of hinge 168 also move upwards, moving the bottom end of gripper 164 inwards engaging with threads 140 of drive shaft 20.

After engaging the lower ends of grippers 164, drive coils 128 may start rotating drive magnets 130 about central axis 156 of drive shaft 20. The bottom ends of drive magnets 130 also start rotating raised latch 146 and engaged grippers 164 around drive shaft 20. Rotating grippers 164 also rotates collar 148 about central axis 156 while being held vertically down by base 142.

The inside ends of grippers 164 rotate within engaged threads 140 moving drive shaft 20 linearly upwards inside of drive shaft housing 77 and nozzle 78. Drive coils 128 may rotate drive magnets 130 in an opposite direction, thus rotating grippers 164 within threads 140 in an opposite direction axially moving drive shaft 20 downward.

Deactivating drive coils 128 drops drive magnets 130 and inside ends of grippers 164 downwards. Hinges 168 also rotate downwards and outwards disengaging the lower ends of grippers 164 from threads 140. Drive shaft 20 is now released from grippers 150 and is free to drop vertically downwards via gravity.

FIG. 15 is a cross-sectional plan view of dual-hinge latch assembly 160. Disconnect rod 132 extends through a centerline of drive shaft 20. Threads 140 extend around the outside surface of drive shaft 20. Latch 162 has an annular cross-sectional shape and attaches at the bottom end to the top end of gripper 164. Collar 148 also includes an annular cross-sectional shape and attaches to the outside end of hinge 168 via pin 166A. As explained above, collar 146 is attached to drive magnets 130 and can move vertically up and down. Drive shaft housing 77 also has an annular cross-sectional shape concentrically aligned with drive shaft 20.

FIGS. 16A-16G are simplified schematic diagrams showing different operations of the single-hinge type control rod drive mechanism 88 or double-hinge type control rod drive mechanism 159 described above, focusing on the primary elements to attain the CRDM functions described herein. For explanation purposes, the following abbreviations are used below.
Drive coils 128 = A
Drive magnet 130 = B
Latch 146, 162 = C
Drive shaft 20 = D
Grippers 150, 164 = E
Disconnect coil 136 = F
Disconnect magnet 134 = G
Grapple 126 = H
Drive shaft housing 77 = I
Base 142 = J
Disconnect rod 132 = K
Control rod assembly 80 = CRA

Concentric electromagnetic coils A and F extend on the outside of drive shaft housing I, altematively referred to as pressure boundary. Coils A and F on the outside interact to move cylindrical magnets B and G, respectively, inside pressure boundary I.

Referring to FIG. 16A, drive coils A are initially de-energized. Latch C is fixed to annular drive magnets B and rests on base J inside drive shaft housing I.

Referring to FIG. 16B, drive coils A are energized, lifting drive magnet B upwards until aligned with drive coils A. This lifts latch C and engages grippers E that pivot around pins that are vertically fixed with respect to the inside of pressure boundary I, yet allow for rotation of latch C. Grippers E fit into threaded grooves of drive shaft D.

Referring to FIG. 16C, by operating drive coils A in a specific sequence, drive magnet B and latch C are set into rotary motion, while at the same time still maintaining a same elevation as drive coils A. This precludes disengagement of grippers E. The rotary motion of grippers E translates into linear drive shaft motion that raises drive rod D and the attached CRA.

Referring back to FIG. 16A, upon a SCRAM signal or loss of electric power, drive coils A release drive magnet B causing grippers E to pivot down and outwards due to the drop of latch C. This provides a safety feature where a gravity-driven drop of drive shaft D drops attached CRA into the reactor core.

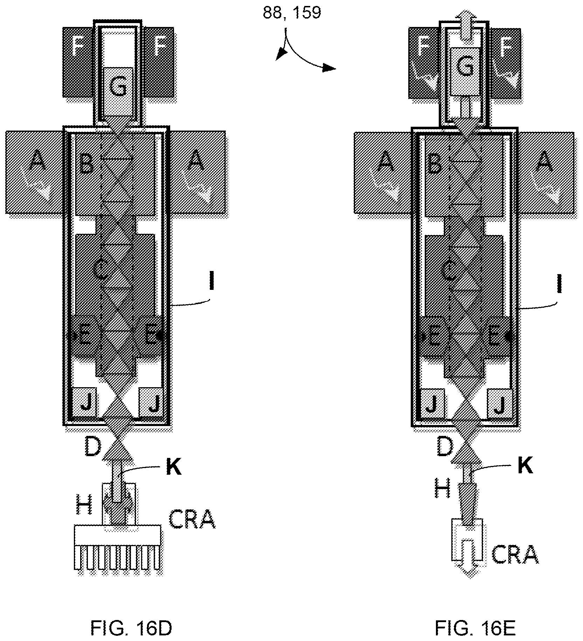

FIGS. 16D-16G show how to remotely disconnect drive shaft D from the CRA prior to disassembly of reactor pressure vessel 52 in FIGS. 4A and 4B. Drive coils A are initially de-energized and latch C is resting on base J. This may be similar to the initial drive shaft engagement configuration shown in FIG. 16A.

Referring to FIG. 16D, drive coils A are activated raising drive magnets B and latch C causing grippers E to engage with drive shaft D. As shown above in FIG. 11C, drive coils A then set drive magnet B and latch C into rotary motion, while at the same time maintaining a same elevation as drive coils A. Rotating grippers E move drive shaft D and disconnect magnet G linearly upwards into raised positions, lifting the attached CRA by a short distance that does not cause a reactivity insertion into the reactor core (within a so-called dead band).

Referring to FIG. 16E, drive coils A are still energized holding drive magnet B, drive shaft D, disconnect magnet G, and disconnect rod K in raised positions. Disconnect coil F is energized holding disconnect magnet G and attached disconnect rod K vertically in place. Drive coils A then may rotate drive magnet B, latch C, and gripper E in an opposite direction linearly lowering drive shaft D. Grapple H on the bottom end of drive shaft D currently holds the CRA, and the bottom end of disconnect rod K starts moving up and out from the grapple arms. The arms of grapple H contract causing the CRA to drop by a short distance, until it rests again on top of the nuclear fuel assembly top nozzle 92 in FIG. 3.

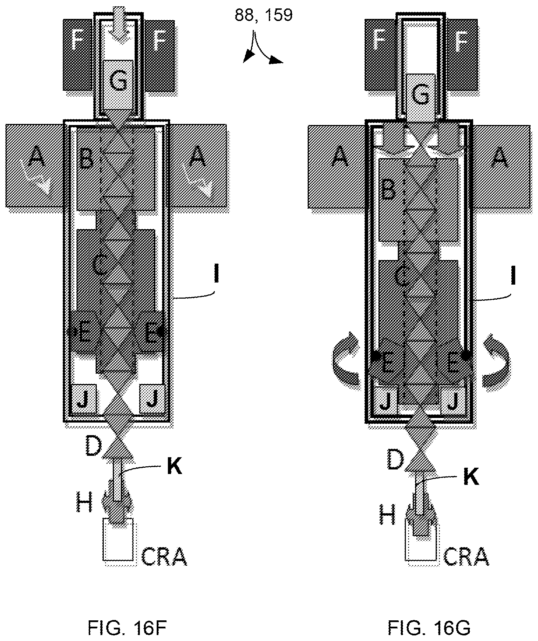

Referring to FIG. 16F, drive coils A remain energized and therefore hold drive magnet B in place. Disconnect coil F is then de-energized. This releases disconnect magnet G causing the bottom end of disconnect rod K to insert into and expand grapple H on the bottom of drive shaft D.

Referring to FIG. 16G, drive coils A are de-energized releasing annular drive magnet B and latch C. Drive shaft D drops by a short distance until grapple H rests on top of the CRA cylindrical hub without being engaged. This allows the upper and lower sections of the reactor pressure vessel to be separated for refueling without removing the CRA.

Re-connection of grapple H to the CRA is performed in reverse order. Drive coils A may move drive shaft D and disconnect magnet G vertically up into raised positions. Disconnect coils F may activate holding disconnect magnet G and disconnect rod K in the raised position. Drive coils A then may lower drive shaft D contracting and inserting grapple H into the CRA. Disconnect coils F then may be deactivated dropping disconnect magnet G and the bottom of disconnect rod K in-between grapple H. Grapple H expands locking into the CRA.

Alternatively, grapple H is reengaged with the CRA by pulling up disconnect magnet G using the electromagnetic force of disconnect coil F. Disconnect magnet G is moved into the raised position without simultaneously energizing drive coil A. The weight of drive shaft D may be large enough so that only disconnect rod K moves upwards inside of drive shaft D. Grapple H contracts inserting into the CRA cylindrical hub. Disconnect coils F are then deactivated so the bottom of disconnect rod K drops back down into grapple H. Grapple H expands locking into the CRA.

Having described and illustrated the principles of a preferred embodiment, it should be apparent that the embodiments may be modified in arrangement and detail without departing from such principles. Claim is made to all modifications and variation coming within the scope of the following claims.

Some of the operations described above may be implemented in software and other operations may be implemented in hardware. One or more of the operations, processes, or methods described herein may be performed by an apparatus, device, or system similar to those as described herein and with reference to the illustrated figures.

It will be apparent to one skilled in the art that the disclosed implementations may be practiced without some or all of the specific details provided. In other instances, certain process or methods have not been described in detail in order to avoid unnecessarily obscuring the disclosed implementations. Other implementations and applications also are possible, and as such, the following examples should not be taken as definitive or limiting either in scope or setting.

References have been made to accompanying drawings, which form a part of the description and in which are shown, by way of illustration, specific implementations. Although these disclosed implementations are described in sufficient detail to enable one skilled in the art to practice the implementations, it is to be understood that these examples are not limiting, such that other implementations may be used and changes may be made to the disclosed implementations without departing from their scope.

Although the examples provided herein have primarily described a pressurized water reactor and/or a light water reactor, it should be apparent to one skilled in the art that the examples may be applied to other types of power systems. For example, the examples or variations thereof may also be made operable with a boiling water reactor, sodium liquid metal reactor, gas cooled reactor, pebble-bed reactor, and/or other types of reactor designs.

It should be noted that examples are not limited to any particular type of reactor cooling mechanism, nor to any particular type of fuel employed to produce heat within or associated with a nuclear reaction. Any rates and values described herein are provided by way of example only. Other rates and values may be determined through experimentation such as by construction of full scale or scaled models of a nuclear reactor system.

Having described and illustrated the principles of a preferred embodiment, it should be apparent that the embodiments may be modified in arrangement and detail without departing from such principles. Claim is made to all modifications and variation coming within the scope of the following claims.

## Claims

1. A control rod drive mechanism (80), comprising:
a drive assembly (122) located on a top end of a reactor pressure vessel (52), the drive assembly (122) including annular drive magnets (130) extending around a top end of a drive shaft (20) and annular drive coils (128) extending around the drive magnets (130), separated by a first pressure boundary;
a latch assembly (138) coupled to the drive magnets (130) configured to engage the drive shaft (20) in response to actuation of the drive assembly (122), the drive coils (128) further configured to rotate the drive magnets (130) and the engaged latch assembly (138) and axially displace the drive shaft (20); and
a disconnect assembly (120), including:
a disconnect magnet (134) coupled to a top end of a disconnect rod (132) that extends through the drive shaft (20); and
annular disconnect coils (136) extending around the disconnect magnet (134), separated by a second pressure boundary, configured to hold the disconnect magnet (134) and the disconnect rod (132) in a raised position to disconnect the drive shaft (20) from a control rod assembly.

2. The control rod drive mechanism (80) of claim 1, wherein the disconnect magnet (134) sits on top of the drive shaft (20) when the disconnect coils (136) are deactivated.

3. The control rod drive mechanism (80) of claim 1 or claim 2, wherein:
activation of the drive coils (128) raises the drive magnets (130) engaging the latch assembly (138) with the drive shaft (20); and
deactivation of the drive coils (128) drops the drive magnets (130) disengaging the latch assembly (138) and dropping the drive shaft (20) via gravity.

4. The control rod drive mechanism (80) of any of claims 1-3, further comprising threads (140) located around the top end of the drive shaft (20), wherein the latch assembly (138) is configured to engage with the threads (140) when the drive coils (128) are activated and axially displace the drive shaft (20) when the drive magnets (130) rotate the latch assembly (138) around the engaged threads (140).

5. The control rod drive mechanism (80) of any of claims 1-4, wherein the latch assembly (138) includes:
a base (142) held down at a bottom end to a drive shaft housing (77);
a collar (148) coupled vertically to, but rotationally de-coupled from the top end of the base (142) through bearings (154);
a latch (142) coupled at a top end to the drive magnets (130); and
a gripper (150) pivotally coupled to the bottom end of the latch (142) and pivotally coupled on the top end to the collar (148).

6. The control rod drive mechanism (80) of claim 5, wherein raising the drive magnets (130) with the drive coils (128) raises the latch (142) and engages the first end of the gripper (150) with a threaded outside surface of the drive shaft (20).

7. The control rod drive mechanism (80) of claim 6, wherein rotating the raised drive magnets (130) with the drive coils (128) causes the engaged gripper (150) to rotate against the threaded outside surface axially displacing the drive shaft (20).

8. The control rod drive mechanism (80) of any of claims 1-7, wherein the latch assembly (138) includes:
a base coupled at a bottom end to the drive shaft housing (77);
a collar (146) coupled vertically to, but rotationally de-coupled from the top end of the base;
a latch (146) coupled at a top end to the drive magnets (130);
a hinge (168) pivotally coupled at a first end to a top end of the collar (146); and
a gripper (146) pivotally coupled at a first end to a second end of the hinge (168) and pivotally coupled at a second end to a bottom end of the latch (146).

9. The control rod drive mechanism (80) of claim 8, wherein activating the drive coils (128) raises the drive magnets (130) and the attached latch (146), moving the second end of the gripper (146) upwards and inwards engaging with a threaded outside surface of the drive shaft (20).

10. The control rod drive mechanism (80) of claim 1, wherein the disconnect rod (132) extends entirely through the drive shaft (20).

11. The control rod drive mechanism (80) of claim 1, wherein the first pressure boundary and the second pressure boundary each comprise a portion of a housing (77) that houses the drive shaft (20).

12. A method of controlling a drive shaft connected to a control rod assembly in a nuclear pressure vessel, comprising:
locating a drive assembly on a top end of the nuclear pressure vessel;
activating the drive assembly to engage a latch with the drive shaft;
rotating the engaged latch with the drive assembly to axially displace the drive shaft for raising or lowering the control rod assembly;
deactivating the drive assembly causing the latch to disengage with the drive shaft and drop via gravity the control rod assembly;
locating a disconnect assembly above the drive assembly on the top end of the nuclear pressure vessel;
activating the disconnect assembly to selectively hold a disconnect rod that extends through the drive shaft;
rotating the latch with the drive assembly in a first direction to linearly move the drive shaft, disconnect rod, and control rod assembly into a raised position; and
activating the disconnect assembly to hold the disconnect rod in the raised position to permit disconnection of the drive shaft from the control rod assembly.

13. The method of claim 12, further comprising:
rotating the latch with the drive assembly in a second opposite direction moving the drive shaft into a lowered position while holding the disconnect rod in the raised position, wherein moving the drive shaft into the lowered position moves a bottom end of the disconnect rod out from between grapple arms located on a bottom end of the drive shaft disconnecting the drive shaft from the control rod assembly.

14. The method of claim 13, further comprising:
deactivating the disconnect assembly, causing the bottom end of the disconnect rod to spread apart the grapple arms on the bottom end of the drive shaft; and
rotating the latch further in the second direction lowering the spread apart grapple arms on top of the disconnected control rod assembly.

15. The method of claim 14, further comprising:
rotating the latch with the drive assembly in the first direction moving the drive shaft and the disconnect rod back into the raised position;
activating the disconnect assembly holding the disconnect rod in the raised position;
rotating the latch with the drive assembly in the second direction moving the drive shaft back into the lowered position while causing the grapple arms to move together and insert into the control rod assembly; and
deactivating the disconnect assembly causing the disconnect rod to spread apart the grapple arms and attach to the control rod assembly.

## Patentansprüche

1. Steuerstabantriebsmechanismus (80), der Folgendes umfasst:
eine Antriebsbaugruppe (122), die sich an einem oberen Ende eines Reaktordruckbehälters (52) befindet, wobei die Antriebsbaugruppe (122) ringförmige Antriebsmagnete (130), die sich um ein oberes Ende einer Antriebswelle (20) erstrecken, und ringförmige Antriebsspulen (128), die sich um die Antriebsmagnete (130), getrennt durch eine erste Druckgrenze, erstrecken, beinhaltet;
eine Klinkenbaugruppe (138), die an die Antriebsmagnete (130) gekoppelt ist, die dazu konfiguriert ist, die Antriebswelle (20) als Reaktion auf Betätigung der Antriebsbaugruppe (122) in Eingriff zu bringen, wobei die Antriebsspulen (128) ferner dazu konfiguriert sind, die Antriebsmagnete (130) und die in Eingriff stehende Einklinkbaugruppe (138) zu drehen und die Antriebswelle (20) axial zu verschieben; und
eine Trennbaugruppe (120), die Folgendes umfasst:
einen Trennmagneten (134), der an ein oberes Ende einer Trennstabs (132) gekoppelt ist, der sich durch die Antriebswelle (20) erstreckt; und
ringförmige Trennspulen (136), die sich um den Trennmagneten (134) getrennt durch eine zweite Druckgrenze erstrecken, die dazu konfiguriert sind, den Trennmagneten (134) und den Trennstab (132) in einer angehobenen Position zu halten, um die Antriebswelle (20) von einer Steuerstabbaugruppe zu trennen.

2. Steuerstabantriebsmechanismus (80) nach Anspruch 1, wobei der Trennmagnet (134) oben auf der Antriebswelle (20) sitzt, wenn die Trennspulen (136) deaktiviert sind.

3. Steuerstabantriebsmechanismus (80) nach Anspruch 1 oder Anspruch 2, wobei:
die Aktivierung der Antriebsspulen (128) die Antriebsmagnete (130) anhebt, wobei die Einklinkbaugruppe (138) mit der Antriebswelle (20) in Eingriff gebracht wird; und
die Deaktivierung der Antriebsspulen (128) die Antriebsmagnete (130) fallen lässt, wobei die Einklinkbaugruppe (138) außer Eingriff gebracht wird und die Antriebswelle (20) schwerkraftbedingt herunterfällt.

4. Steuerstabantriebsmechanismus (80) nach einem der Ansprüche 1-3, der ferner ein Gewinde (140) umfasst, das um das obere Ende der Antriebswelle (20) liegt, wobei die Einklinkbaugruppe (138) dazu konfiguriert ist, wenn die Antriebsspulen (128) aktiviert werden, mit dem Gewinde (140) in Eingriff zu gelangen und die Antriebswelle (20) axial zu verschieben, wenn die Antriebsmagnete (130) die Einklinkbaugruppe (138) um das im Eingriff befindliche Gewinde (140) drehen.

5. Steuerstabantriebsmechanismus (80) nach einem der Ansprüche 1-4, wobei die Einklinkbaugruppe (138) Folgendes beinhaltet:
eine Basis (142), die an einem unteren Ende an ein Antriebswellengehäuse (77) hinunter gehalten wird;
einen Bund (148), der über Lager (154) in vertikaler Richtung an das obere Ende der Basis (142) gekoppelt, jedoch drehtechnisch von diesem entkoppelt ist;
eine Klinke (142), die an einem oberen Ende an den Antriebsmagneten (130) gekoppelt ist; und
einen Greifer (150), der schwenkend an das untere Ende der Klinke (142) gekoppelt ist, und an dem oberen Ende schwenkend an den Bund (148) gekoppelt ist.

6. Antriebsmechanismus (80) nach Anspruch 5, wobei das Anheben der Antriebsmagnete (130) mittels der Antriebsspulen (128) die Klinke (142) anhebt und das erste Ende des Greifers (150) mit einer Gewindeaußenfläche der Antriebswelle (20) in Eingriff bringt.

7. Antriebsmechanismus (80) nach Anspruch 6, wobei das Drehen der angehobenen Antriebsmagnete (130) mit den Antriebsspulen (128) bewirkt, dass sich der im Eingriff befindliche Greifer (150) gegen die Gewindeaußenfläche der Antriebswelle dreht, wobei die Antriebswelle (20) axial verschoben wird.

8. Steuerstabantriebsmechanismus (80) nach einem der Ansprüche 1-7, wobei die Einklinkanordnung (138) Folgendes beinhaltet:
eine Basis, die an einem unteren Ende an ein Antriebswellengehäuse (77) gekoppelt ist;
einen Bund (146), der in vertikaler Richtung an das obere Ende der Basis gekoppelt, jedoch drehtechnisch von diesem entkoppelt ist;
eine Klinke (146), die an einem oberen Ende an die Antriebsmagnete (130) gekoppelt ist;
ein Scharnier (168), das schwenkend an ein erstes Ende an einem oberen Ende des Bundes (146) gekoppelt ist; und
einen Greifer (146), der schwenkend an ein erstes Ende an einem zweiten Ende des Scharniers (168) gekoppelt ist und schwenkend an einem zweiten Ende an ein unteres Ende der Klinke (146) gekoppelt ist.

9. Steuerstabantriebsmechanismus (80) nach Anspruch 8, wobei das Aktivieren der Antriebsspulen (128) die Antriebsmagnete (130) und die angebrachte Klinke (146) anhebt, wobei das zweite Ende des Greifers (146) nach oben und nach innen in Eingriff mit einer Gewindeaußenfläche der Antriebswelle (20) bewegt wird.

10. Steuerstabantriebsmechanismus (80) nach Anspruch 1, wobei sich der Trennstab (132) vollständig durch die Antriebswelle (20) erstreckt.

11. Steuerstabantriebsmechanismus (80) nach Anspruch 1, wobei die erste Druckgrenze und die zweite Druckgrenze jeweils einen Abschnitt eines Gehäuses (77) umfassen, das die Antriebswelle (20) aufnimmt.

12. Verfahren zum Steuern eine Antriebswelle, die mit einer Steuerstabbaugruppe in einem Kerndruckbehälter verbunden ist, das Folgendes umfasst:
Anordnen einer Antriebsbaugruppe an einem oberen Ende des Kerndruckbehälters;
Aktivieren der Antriebsbaugruppe, um eine Klinke mit der Antriebswelle in Eingriff zu bringen;
Drehen der im Eingriff stehenden Klinke mit der Antriebsbaugruppe, um die Antriebswelle axial zu verschieben, um die Steuerstabbaugruppe anzuheben oder zu senken;
Deaktivieren der Antriebsbaugruppe, wodurch die Klinke aus dem Eingriff mit der Antriebswelle gebracht wird und die Steuerstabbaugruppe schwerkraftbedingt herunterfällt;
Anordnen einer Trennbaugruppe oberhalb der Antriebsbaugruppe an dem oberen Ende des Kerndruckbehälters;
Aktivieren der Trennbaugruppe, um einen Trennstab, der sich durch die Antriebswelle erstreckt, selektiv in einer Halteposition zu halten;
Drehen der Klinke mittels der Antriebsbaugruppe in einer ersten Richtung, um die Antriebswelle, den Trennstab und die Steuerstabbaugruppe linear in eine angehobene Position zu bewegen; und
Aktivieren der Trennbaugruppe, um den Trennstab in der angehobenen Position zu halten, um die Trennung der Antriebswelle von der Steuerstabbaugruppe zu ermöglichen.

13. Verfahren nach Anspruch 12, das ferner Folgendes umfasst:
Drehen der Klinke mit der Antriebsbaugruppe in einer zweiten entgegengesetzten Richtung, wobei die Antriebswelle in eine gesenkte Position bewegt wird, während der Trennstab in der angehobenen Position gehalten wird, wobei das Bewegen der Antriebswelle in die gesenkte Position ein unteres Ende des Trennstabs zwischen den Greifarmen, die sich an einem unteren Ende der Antriebswelle befinden, heraus bewegt, wobei die Antriebswelle von der Steuerstabbaugruppe getrennt wird.

14. Verfahren nach Anspruch 13, das ferner Folgendes umfasst:
Deaktivieren der Trennbaugruppe, was das untere Ende des Trennstabs veranlasst, die Greifarme an dem unteren Ende der Antriebswelle auseinander zu spreizen; und
Drehen der Klinke weiter in der zweiten Richtung, wobei die auseinander gespreizten Greifarme an der Oberseite der getrennten Steuerstabbaugruppe gesenkt werden.

15. Verfahren nach Anspruch 14, das ferner Folgendes umfasst:
Drehen der Klinke mittels der Antriebsbaugruppe in einer ersten Richtung, wobei die Antriebswelle und der Trennstab in die angehobene Position zurück bewegt werden;
Aktivieren der Trennbaugruppe, die den Trennstab in der angehobenen Position hält;
Drehen der Klinke mit der Antriebsbaugruppe in der zweiten Richtung, wobei die Antriebswelle in ihre abgesenkte Position zurück bewegt wird, während die Greifarme dazu veranlasst werden, sich aufeinander zu zu bewegen und in die Steuerstabbaugruppe einzufügen; und
Deaktivieren der Trennbaugruppe, wobei der Trennstab dazu veranlasst wird, die Greifarme auseinander zu spreizen und an der Steuerstabbaugruppe zu befestigen.

## Revendications

1. Mécanisme de commande de grappes (80), comprenant :
un ensemble de commande (122) situé sur une extrémité supérieure d'une cuve de réacteur sous pression (52), l'ensemble de commande (122) comprenant des aimants de commande (130) annulaires s'étendant autour d'une extrémité supérieure d'une tige de commande (20) et des bobines de commande (128) annulaires s'étendant autour des aimants de commande (130), séparés par une première enveloppe de pression ;
un ensemble de verrouillage (138) raccordé aux aimants de commande (130), conçu pour s'accoupler avec la tige de commande (20) en réponse à l'actionnement de l'ensemble de commande (122), les bobines de commande (128) étant conçues, en outre, pour imprimer une rotation aux aimants de commande (130) et à l'ensemble de verrouillage (138) raccordé et déplacer axialement la tige de commande (20) ; et
un ensemble de désolidarisation (120), comprenant :
un aimant de désolidarisation (134) raccordé à une extrémité supérieure d'une barre de désolidarisation (132) qui s'étend à travers la tige de commande (20) ; et
des bobines de désolidarisation (136) annulaires s'étendant autour de l'aimant de désolidarisation (134), séparées par une seconde enveloppe de pression, conçues pour maintenir l'aimant de désolidarisation (134) et la barre de désolidarisation (132) dans une position élevée afin de désolidariser la tige de commande (20) d'une grappe de commande.

2. Mécanisme de commande de grappes (80) selon la revendication 1, dans lequel l'aimant de désolidarisation (134) repose sur le dessus de la tige de commande (20) lorsque les bobines de désolidarisation (136) sont désactivées.

3. Mécanisme de commande de grappes (80) selon la revendication 1 ou la revendication 2, dans lequel :
l'activation des bobines de commande (128) élève les aimants de commande (130), ceci accouplant l'ensemble de verrouillage (138) avec la tige de commande (20) ; et
la désactivation des bobines de commande (128) fait chuter les aimants de commande (130), ceci désaccouplant l'ensemble de verrouillage (138) et faisant chuter la tige de commande (20) par gravité.

4. Mécanisme de commande de grappes (80) selon l'une quelconque des revendications 1 à 3, comprenant, en outre, des filets (140) se trouvant autour de l'extrémité supérieure de la tige de commande (20), dans lequel l'ensemble de verrouillage (138) est conçu pour s'accoupler avec les filets (140) lorsque les bobines de commande (128) sont activées et déplacer axialement la tige de commande (20) lorsque les aimants de commande (130) impriment une rotation à l'ensemble de verrouillage (138) autour des filets (140) accouplés.

5. Mécanisme de commande de grappes (80) selon l'une quelconque des revendications 1 à 4, dans lequel l'ensemble de verrouillage (138) comprend :
une base (142) retenue, au niveau d'une extrémité inférieure, sur un carter de tige de commande (77) ;
un collier (148) raccordé verticalement par le biais de paliers (154) à l'extrémité supérieure de la base (142), mais indépendant de celle-ci en rotation ;
un élément de verrouillage (142) raccordé, au niveau d'une extrémité supérieure, aux aimants de commande (130) ; et
un cliquet (150) raccordé à pivotement à l'extrémité inférieure de l'élément de verrouillage (142) et raccordé à pivotement, au niveau de l'extrémité supérieure, au collier (148).

6. Mécanisme de commande de grappes (80) selon la revendication 5, dans lequel l'élévation des aimants de commande (130) au moyen des bobines de commande (128) élève l'élément de verrouillage (142) et accouple la première extrémité du cliquet (150) avec une surface extérieure filetée de la tige de commande (20).

7. Mécanisme de commande de grappes (80) selon la revendication 6, dans lequel la mise en rotation des aimants de commande (130) élevés au moyen des bobines de commande (128) entraîne une rotation du cliquet (150) accouplé contre la surface extérieure filetée déplaçant axialement la tige de commande (20).

8. Mécanisme de commande de grappes (80) selon l'une quelconque des revendications 1 à 7, dans lequel l'ensemble de verrouillage (138) comprend :
une base raccordée, au niveau d'une extrémité inférieure, au carter de tige de commande (77) ;
un collier (146) raccordé verticalement à l'extrémité supérieure de la base, mais indépendant de celle-ci en rotation ;
un élément de verrouillage (146) raccordé, au niveau d'une extrémité supérieure, aux aimants de commande (130) ;
une charnière (168) raccordée à pivotement, au niveau d'une première extrémité, à une extrémité supérieure du collier (146) ; et
un cliquet (146) raccordé à pivotement, au niveau d'une première extrémité, à une seconde extrémité de la charnière (168) et raccordé à pivotement, au niveau d'une seconde extrémité, à une extrémité inférieure de l'élément de verrouillage (146).

9. Mécanisme de commande de grappes (80) selon la revendication 8, dans lequel l'activation des bobines de commande (128) élève les aimants de commande (130) et l'élément de verrouillage (146) raccordé, ceci déplaçant la seconde extrémité du cliquet (146) vers le haut et l'intérieur et l'accouplant avec une surface extérieure filetée de la tige de commande (20).

10. Mécanisme de commande de grappes (80) selon la revendication 1, dans lequel la barre de désolidarisation (132) s'étend entièrement à travers la tige de commande (20).

11. Mécanisme de commande de grappes (80) selon la revendication 1, dans lequel la première enveloppe de pression et la seconde enveloppe de pression constituent chacune une partie d'un carter (77) qui contient la tige de commande (20).

12. Procédé de pilotage d'une tige de commande solidarisée avec une grappe de commande dans une cuve de réacteur nucléaire sous pression, comprenant :
placer un ensemble de commande sur une extrémité supérieure de la cuve de réacteur nucléaire sous pression ;
activer l'ensemble de commande afin d'accoupler un élément de verrouillage avec la tige de commande ;
imprimer une rotation à l'élément de verrouillage accouplé au moyen de l'ensemble de commande afin de déplacer axialement la tige de commande de façon à élever ou abaisser la grappe de commande ;
désactiver l'ensemble de commande, par suite de quoi l'élément de verrouillage se désaccouple de la tige de commande et fait chuter par gravité la grappe de commande ;
placer un ensemble de désolidarisation au-dessus de l'ensemble de commande sur l'extrémité supérieure de la cuve de réacteur nucléaire sous pression ;
activer l'ensemble de désolidarisation afin de maintenir, de manière sélective, une barre de désolidarisation qui s'étend à travers le tige de commande ;
imprimer une rotation à l'élément de verrouillage au moyen de l'ensemble de commande dans un premier sens afin de déplacer linéairement la tige de commande, la barre de désolidarisation et la grappe de commande jusqu'à une position élevée ; et
activer l'ensemble de désolidarisation afin de maintenir la barre de désolidarisation dans la position élevée de façon à ce que la tige de commande puisse être désolidarisée de la grappe de commande.

13. Procédé selon la revendication 12, comprenant en outre :
imprimer une rotation à l'élément de verrouillage au moyen de l'ensemble de commande dans un second sens opposé, ceci déplaçant la tige de commande jusqu'à une position abaissée tandis que la barre de désolidarisation est maintenue dans la position élevée, le déplacement de la tige de commande jusqu'à la position abaissée déplaçant une extrémité inférieure de la barre de désolidarisation de sorte qu'elle ne se trouve plus entre des bras de préhension situés sur une extrémité inférieure de la tige de commande, ceci désolidarisant la tige de commande de la grappe de commande.

14. Procédé selon la revendication 13, comprenant en outre :
désactiver l'ensemble de désolidarisation, par suite de quoi l'extrémité inférieure de la barre de désolidarisation écarte les bras de préhension sur l'extrémité inférieure de la tige de commande ; et
imprimer une rotation à l'élément de verrouillage plus avant dans le second sens, ceci abaissant les bras de préhension écartés au-dessus de la grappe de commande désolidarisée.

15. Procédé selon la revendication 14, comprenant en outre :
imprimer une rotation à l'élément de verrouillage au moyen de l'ensemble de commande dans le premier sens, ceci déplaçant la tige de commande et la barre de désolidarisation de façon à les ramener à la position élevée ;
activer l'ensemble de désolidarisation de façon à maintenir la barre de désolidarisation dans la position élevée ;
imprimer une rotation à l'élément de verrouillage au moyen de l'ensemble de commande dans le second sens, ceci déplaçant la tige de commande de façon à la ramener à la position abaissée et de sorte que les bras de préhension se resserrent et s'insèrent dans la grappe de commande ; et
désactiver l'ensemble de désolidarisation par suite de quoi la barre de désolidarisation écarte les bras de préhension et les raccorde à la grappe de commande.
